# EUROPÄISCHE PATENTSCHRIFT

(11) **EP 3 707 316 B1**
(45) Veröffentlichungstag und Bekanntmachung des Hinweises auf die Patenterteilung: **19.02.2025**
(21) Anmeldenummer: 18803576.0
(22) Anmeldetag: 05.11.2018
(51) Int. Cl.: E03F 5/02

(54) **VERFAHREN ZUR HERSTELLUNG EINES SCHACHTUNTERTEILS**
METHOD OF PRODUCING A SHAFT BOTTOM
PROCÉDÉ DE PRODUCTION D'UN FOND DE REGARD

(30) Priorität: 06.11.2017 DE 202017106688 U
(43) Veröffentlichungstag der Anmeldung: 16.09.2020
(73) Patentinhaber: REHAU Industries SE & Co. KG, 95111 Rehau (DE)
(72) Erfinder: HENDEL, Roland, 91074 Herzogenaurach (DE); HEGER, Tobias, 91315 Höchstadt a.d. Aisch (DE); KANIA, Guido, 91080 Marloffstein (DE); STASCHIK, Peter, 91325 Adelsdorf (DE); LAPSIN, Andrej, 95028 Hof (DE); MORETH, Heiko, 95185 Gattendorf (DE); EHM, Peter, 95028 Hof (DE); WINTER, Karlheinz, 95111 Rehau (DE); GAREIS, Jürgen, 95233 Helmbrechts (DE)
(86) Internationale Anmeldenummer: PCT/EP2018/080119
(87) Internationale Veröffentlichungsnummer: WO 2019/086650

(56) Entgegenhaltungen:
- EP-A1- 0 740 024
- EP-A2- 2 230 058
- DE-C1- 19 828 094
- DE-U1- 202013 101 069
- DE-U1- 202016 102 369

## Beschreibung

Die Erfindung betrifft ein Verfahren zur Herstellung eines Schachtunterteils.

Schachtsysteme für Schmutz- und Regenwasser werden heute aus Beton, Stahlbeton oder Kunststoff hergestellt. Üblicherweise werden zur Realisierung von Abwassernetzen alle Abwinklungen und Zusammenführungen der angeschlossenen Rohrleitungen in den Schachtbauteilen selbst durchgeführt, damit diese kritischen Punkte dauerhaft zugänglich sind und im Falle von Verstopfungen oder ähnlichem leicht gereinigt werden können. Als Folge davon existieren zwar eine Reihe von standardisierten Schächten bzw. Schachtbauteilen oder -unterteilen, z.B. solche mit geradem Durchlauf oder Zuläufen in vordefinierten Winkeln, meist in einem 15°-Raster.

Es zeigt sich aber, dass in jedem Abwasserkanalnetz eine große Anzahl von auftragsbezogen angefertigten Sonderschächten notwendig ist, deren Gerinne speziell nach den Vorgaben des Tiefbauplaners angefertigt werden muss, was beispielsweise die Winkel der Zuläufe, die Anzahl der Zuläufe, die Nennweiten, die Gefälle im Schachtunterteil und anderes mehr angeht.

Derartige individuell gefertigte Schächte bzw. Schachtbauteile oder -unterteile werden bei einer Ausführung in Beton üblicherweise durch Ausmauern bzw. Ausklinkern von Gerinnen in leeren Betonringen oder Leerschachtböden hergestellt. Im Falle von Kunststoffschächten werden entweder tiefgezogene Schalen in einen Ring eingeschweißt oder aus polymeren Halbzeugen, wie Rohren, Platten und Formteilen, durch einen Konfektionsprozess entsprechende Gerinneformen ausgebildet und stoffschlüssig in einen Ring eingeschweißt.

Derartige individuell hergestellte Schächte oder Schachtbauteile bzw. -unterteile erfordern zur manuellen oder teilautomatisierten Konfektion eine exakte Vorplanung. Für den anschließenden komplexen, meist manuellen Herstellungsprozess ist ein hoher Arbeitszeitaufwand notwendig.

Als Folge dessen sind derartige individuell hergestellte Schachtunterteile teuer, was die Herstellkosten angeht.

Ebenso weisen die durch Konfektionsarbeitsgänge hergestellten Schachtunterteile aus Polymermaterial aufgrund der Vielzahl an Schweiß- und Fräsarbeiten meist große Toleranzen und raue Oberflächen auf, was den störungsfreien Abfluss des Fluids behindern kann. Wenn z.B. abgewinkelte Gerinne herzustellen sind, so sind diese bei der Herstellung aus geraden Rohren durch segmentgeschweißte Rohrbögen in den notwendigen Winkeln auszuführen. Diese Segmente weichen von der idealen Kurvenbahn ab, als Folge sind Abflusshindernisse möglich. Ein kontinuierlicher, idealer Biegeverlauf eines Gerinnes kann mit den kommerziell erhältlichen geraden Halbzeugen und Platten nicht oder nur mit unverhältnismäßig hohem Aufwand realisiert werden.

Aufgrund der geringen Stückzahl solcher Schächte bzw. Schachtbauteile oder -unterteile ist eine Investition in entsprechende Spritzguss- oder Tiefziehwerkzeuge nicht wirtschaftlich.

Schließlich ist noch zu beachten, dass aufgrund von Lageabweichungen der eingemessenen Leitungen, aufgrund von unbekannten Bodenhindernissen oder wegen kreuzenden Leitungen nach erfolgter Planung die Ausführungspläne noch während der Bauphase anzupassen oder zu ändern sind. Im Vorfeld konfektionierte individuelle Schachtunterteile müssen in diesem Fall entweder verworfen oder neu gebaut oder aufwendig manuell umgebaut werden.

Hier setzt die Erfindung ein, deren Aufgabe es ist, ein Verfahren zur Herstellung eines Schachtunterteils anzugeben, welches individuell angefertigt ist und so die oben aufgezeigten Nachteile des Standes der Technik überwindet.

Die Lösung der vorliegenden Aufgabe erfolgt gemäß vorliegender Erfindung mit einem Verfahren nach Anspruch 1.

Ein so hergestelltes Schachtunterteil überwindet die vorstehend genannten Nachteile des Standes der Technik.

Durch das Vorsehen, dass das Schachtunterteil einteilig oder mehrteilig ausgebildet ist und seine Funktionskontur wenigstens abschnittsweise aus einem Körper durch Materialabtrag und / oder Materialaufbau gebildet ist, ist gewährleistet, dass die Funktionskontur exakt nach der vorgegebenen Planung ausgeführt ist, überdies ist das Schachtunterteil fluiddicht ausgebildet.

Dabei ist vorgesehen, dass das Gerinne durch Materialabtrag und / oder Materialaufbau aus dem Körper mit Hilfe einer Maschine gebildet ist.

Hierzu kann vorgesehen sein, dass eine Maschine durch Materialabtrag aus dem Körper das Schachtunterteil bildet.

Eine solche Maschine kann beispielsweise eine 5-Achs-CNC-gesteuerte Portalfräse oder eine großdimensionierte langsam laufende Drehbank sein.

Zur Steuerung der Maschine ist vorgesehen, dass die Maschine eine Steuerung aufweist, die einen Datensatz nutzt, wobei der Datensatz insbesondere ein elektronischer Datensatz ist.

Der Materialaufbau auf dem Körper kann ebenso mit Hilfe einer Maschine vorgenommen werden. Eine solche Maschine ist beispielsweise eine 3D-Druckmaschine.

Für die Steuerung einer derartigen Maschine zum Materialaufbau gilt das Vorstehend gesagte.

Vorteilhafterweise kann der Datensatz zur Steuerung der Maschine aus Plandaten und/oder aus Vermessungsdaten und / oder aus Kanalnetzdaten generiert sei. Auf diese Weise kann ein Schachtunterteil genau nach den vorgegebenen Planungen ausgeführt werden, sodass der Anschluss der Rohrleitungen an das Schachtbauteil oder den Schacht in einfacher Weise vorgenommen werden kann.

Es kann vorgesehen sein, dass die Form des Schachtunterteils zunächst als digitales Datenmodell generiert wird. Das digitale Datenmodell des Schachtunterteils kann in allen Phasen der Planung aktualisiert und bei Bedarf abgeändert werden.

Erst unmittelbar vor dem Einbau des Schachts erfolgt die Herstellung des benötigten individuellen Schachtunterteils mit dem Verfahren nach Anspruch 1.

Erfindungsgemäß ist der Körper ein Abschnitt eines Vollstabes. Ein solcher Vollstab kann beispielsweise hergestellt sein durch Extrusion, durch Gießen, durch Pressen, durch Wickeln oder durch Sintern. Ein solcher Vollstab ist einteilig ausgebildet, ein aus dem Vollstab hergestelltes Schachtunterteil ist ebenfalls einteilig ausgebildet.

Dieser Vollstab weist die Außenabmessungen des zu formenden Schachtbauteils auf oder Außenabmessungen, die etwas größer sind als das zu formende Schachtbauteil. Die Form des Schachtbauteils kann durch zerspanendes Herausarbeiten von Material aus dem Körper erfolgen, wobei die Maschine zum Materialabtrag durch den Datensatz gesteuert ist, den das digitale Datenmodell des Schachtbauteils repräsentiert.

Das beim zerspanenden Herausarbeiten anfallende Material kann für die Bildung von neuen Körpern erneut eingesetzt werden. Durch das Herausarbeiten der Funktionskontur beim Schachtbauteil können Schweißnähte, Segmentbögen, Sohlsprünge und raue Oberflächen vermieden werden, so dass ein einstückiges Teil mit einer optimierten Hydraulik herstellbar ist.

In analoger Weise kann vorgesehen sein, dass die Funktionskontur des Schachtbauteils durch Materialaufbau auf einen Körper erfolgt. Der Körper kann ebenfalls ein Abschnitt eines Vollstabes sein. Auch kann die Maschine für den Materialaufbau gesteuert werden, wobei der Datensatz zur Steuerung der Maschine auf das digitale Datenmodell des zu formenden Schachtbauteils zurückgreift.

Hierzu kann vorgesehen sein, dass das Schachtbauteil unter Verwendung eines generativen Fertigungsverfahrens, beispielsweise durch ein 3-D-Druckverfahren, hergestellt ist.

Hierzu kann mit Vorteil ein datenverarbeitungsmaschinenlesbares dreidimensionales Modell für die Herstellung genutzt werden.

Das Fertigungsverfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), KunststoffPulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Beim Ablegen von Material im Rahmen eines 3-D-Druckvorgangs ist zu beachten, dass es möglichst zu keinen Fehlstellen bzw. Lunkern kommt, die hinsichtlich der Fluiddichtheit des Schachtbauteils Probleme bereiten können.

Je nach der Komplexität des zu formenden Schachtunterteils bzw. den herrschenden technischen Randbedingungen kann vorgesehen sein, dass das Schachtunterteil ausschließlich durch Materialabtrag aus einem Körper gebildet ist oder dass das Schachtunterteil ausschließlich durch Materialaufbau auf einem Körper gebildet ist oder dass das Schachtunterteil durch Materialabtrag und Materialaufbau aus einem Körper gebildet ist. Die Erfindung umfasst weiterhin, dass zu Sicherung der Qualität des derartig gefertigten Schachtunterteils dieses vermessen wird, um die Daten des Bauteils mit den Daten vergleichen zu können, die das digitale Datenmodell des Schachtunterteils bilden. Hierzu kann vorgesehen sein, dass die 5-Achs-Portalfräse mit einem Taster ausgerüstet wird, der die Funktionskontur und die Abmessungen des Schachtunterteils vermisst. Alternativ kann dies auch berührungslos mit entsprechenden Messmitteln vorgenommen werden.

Im Rahmen liegt auch, dass die Maschine für den Materialabtrag und / oder Materialaufbau ortsfest in einer Fertigungsstätte für Schachtbauteile oder Schächte aufgestellt sein kann, oder dass die Maschine am Ort der Baustelle, an der der Schacht einzubauen ist, aufgestellt sein kann und an der Baustelle vor Ort das Schachtunterteil fertigt. Bei der letzten Variante kann unmittelbar vor der Fertigung des Schachtunterteils noch eine etwaige Änderung der Funktionskontur des Schachtunterteils in einfacher Weise vorgenommen werden.

Schließlich kann vorzusehen sein, dass die Maschine für den Materialabtrag und / oder Materialaufbau direkt am Einbauort des Schachtunterteils aufgestellt sein kann und das Schachtunterteil direkt am Einbauort des Schachtunterteils fertigt.

Eine derartige Maschine für den Materialabtrag und / oder Materialaufbau kann in vorteilhafter Weise verfahrbar oder verlagerbar ausgeführt sein und insbesondere so aufgebaut sein, dass diese zumindest zum Teil zerlegbar und in einem Lastkraftwagen verladbar ist.

Erfindungsgemäß ist vorgesehen, dass das Schachtunterteil aus einem Polymermaterial besteht oder ein Polymermaterial enthält, wobei das Polymermaterial bevorzugt ein Thermoplast, und besonders bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist.

Derartige Polymermaterialien sind langlebig, inert, stabil, weisen ein geringes Gewicht auf, sind einfach handhabbar, leicht installierbar und können kostengünstig bereitgestellt werden. Insbesondere ist es auf diese Weise sehr einfach, aus dem Polymermaterial das Schachtunterteil zu bilden.

Es kann im Rahmen der vorliegenden Erfindung vorgesehen sein, dass das Polymermaterial Zusätze enthält, die das Wärmeleitvermögen des Polymermaterials verbessern, wie beispielsweise Kreide, Talkum oder Bornitrid, um so die beim Materialabtrag, beispielsweise beim Fräsen, freiwerdende Wärme abzuleiten. Der Anteil an solchen Zusätzen soll aber auf das nötige Maß beschränkt bleiben, da diese die Fräswerkzeuge verschleißen, was weitgehend vermieden werden soll.

Es wurde erkannt, dass ein Schacht, welcher ein Schachtunterteil wie vorstehend beschrieben, umfasst, ganz besonders vorteilhaft ist, da ein solcher Schacht genau nach der Planung fertigbar und einbaubar ist.

Ein solcher Schacht kann dabei zusammengesetzt sein aus dem Schachtunterteil und weiteren Bauteilen, wie beispielsweise einem oder mehreren Schachtmittelteilen, einem Schachtoberteil, einem Bauteil, das den Schacht zur Erdoberfläche hin abschließt oder vergleichbares. In einer bevorzugten Ausführung der Erfindung kann vorgesehen sein, dass diese miteinander fluiddicht verbunden sind.

Anwendung findet die vorliegende Erfindung insbesondere im Bereich der Kanal- und Abwassertechnik.

Durch die vorliegende Erfindung können Schachtunterteile ohne großen Aufwand genau nach vorgegebener Spezifikation gefertigt werden.

Neben der geschilderten Anwendung gibt es weitere Anwendungsfelder in der Regenwasserbewirtschaftung, bei Hausanschlüssen, in Kläranlagen, in der Schwimmbadtechnik, in der Industrie, in der Landwirtschaft und in weiteren Bereichen. Weitere wichtige Merkmale und Vorteile der Erfindung ergeben sich aus den Unteransprüchen, aus den Figuren und aus der zugehörigen Figurenbeschreibung.

Bevorzugte Ausführungsbeispiele der Erfindung sind in den Fig. dargestellt und werden in der nachfolgenden Beschreibung näher erläutert.

Hierzu zeigt:
- Fig. 1:: einen schematischen Ablauf der Herstellung eines Schachtbauteils in Formeines Schachtunterteils aus einem Vollstab unter Bildung eines Körpers in einer ersten Ausführung;
- Fig. 2:: eine schematische perspektivische Ansicht eines Körpers in einer nicht erfindungsgemäßen

- Fig. 3:: Ausführung zur Herstellung eines Schachtunterteils; eine schematische seitliche Schnittansicht eines Körpers in der nicht erfindungsgemäßen Ausführung gemäß Fig. 2;
- Fig. 4:: eine schematische perspektivische Ansicht einer Maschine bei der Bearbeitung eines Körpers in der nicht erfindungsgemäßen Ausführung gemäß Fig. 2.

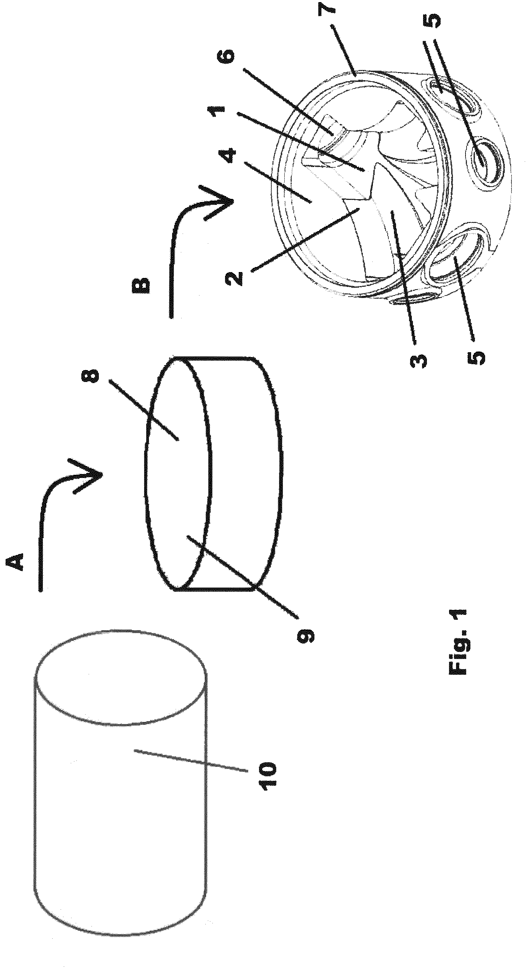

In der Fig. 1 ist der schematische Ablauf der Herstellung eines Schachtunterteils 1 aus einem Vollstab 10 unter Bildung eines Körpers 9 in einer ersten Ausführung gezeigt.

Der Vollstab 10, der Polymermaterial enthält bzw. aus Polymermaterial besteht, weist einen etwa kreisförmigen Querschnitt auf, wobei der etwa kreisförmige Querschnitt des Vollstabs 10 so groß oder etwas größer ist, als der Durchmesser des Schachtunterteils 1, welches herzustellen ist. Der Vollstab 10 ist lunkerfrei und homogen.

Im ersten Schritt A wird ein Abschnitt des Vollstabs 10 abgetrennt und so der Körper 9 gebildet. Der Körper 9, der aus dem Vollstab 10 gebildet ist, weist die Form eines Zylinders auf, er ist einteilig ausgebildet.

Das Abtrennen des Abschnitts vom Vollstab 10 zum Körper 9 kann beispielsweise durch einen Schneidvorgang oder einen Fräsvorgang erfolgen.

Der Körper 9 weist eine Fläche 8 auf, die eine Deckfläche des zylindrisch ausgebildeten Körpers 9 darstellt.

Im zweiten Schritt B wird aus dem Körper 9 das Schachtunterteil 1 gemäß vorliegender Erfindung gebildet. Aus dem Körper 9 wird durch Materialabtrag und / oder Materialaufbau das Schachtunterteil 1 geformt. Hierzu kann ein hier nicht gezeigte Maschine 12 beispielsweise an der Fläche 8 mit dem Materialabtrag und / oder Materialaufbau beginnen.

Am Schachtunterteil 1 wird hierzu die Funktionskontur 2 gebildet, welche ein Gerinne 3 umfasst, das dazu dient, Fluid zu leiten.

An der Zylindermantelfläche des Schachtunterteils 1 sind Zuleiteinrichtungen 5 ausgebildet, die derartig geformt sind, dass mit diesen Zuleitrohre verbindbar, beispielsweise in diese einsteckbar sind. Die Zuleiteinrichtungen 5 sind weiterhin mit einer in Fig. 1 nicht gezeigten Nut versehen, um in der Nut ein Dichtungselement aufzunehmen, welches eine fluiddichte Verbindung des an das Schachtunterteil 1 anzuschließenden Zuleitrohres gestattet.

Eine Ableiteinrichtung 6, die in Form eines Muffenanschlusses ausgebildet ist, ist am Schachtunterteil 1 ebenfalls ausgeformt. An der Ableiteinrichtung 6 ist ein Ableitrohr anschließbar, welches ebenso wie vorstehend beschrieben fluiddicht mit dem Schachtunterteil 1 durch ein Dichtungselement, das in einer Nut an der Ableiteinrichtung 6 aufgenommen ist, verbunden ist.

Das Gerinne 3 im Schachtunterteil 1 wird durch Trittflächen 4 begrenzt, welche gestatten, dass dort Personal, das sich im Schacht beispielsweise zu Reinigungs- oder Kontrollzwecken aufhält, auftritt.

Am Schachtunterteil 1 ist weiterhin ein Verbindungsabschnitt 7 ausgebildet, der dazu dient, dass das Schachtunterteil 1 fluiddicht mit einem hier nicht gezeigten Schachtmittelteil oder einem Schachtoberteil verbindbar ist.

Der Verbindungsabschnitt 7 ist als in Einbaulage nach oben hervorstehender Rand ausgebildet, welcher ebenfalls eine Nut mit einem in der Nut aufgenommenen Dichtungselement aufweisen kann.

Bei der Herstellung des Schachtunterteils 1 im Schritt B aus dem Körper 9 kann beispielsweise vorgesehen sein, dass das Gerinne 3, die Zuleiteinrichtungen 5 und die Ableiteinrichtung 6 durch Materialabtrag gebildet sind, wobei hierzu eine 5-Achs-CNC-Portalfräse eingesetzt wird, die die Funktionskontur 2 ausbildet.

Es kann weiterhin vorgesehen sein, dass der Verbindungsabschnitt 7 des Schachtunterteils 1 durch einen Materialauftrag am Körper 9 beispielsweise mit Hilfe einer 3D-Druckmaschine erfolgt.

Das so hergestellte Schachtunterteil 1 ist einteilig ausgebildet.

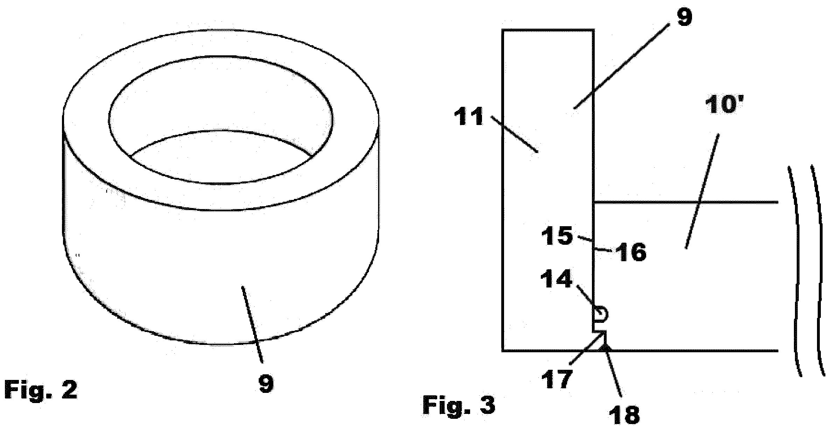

In der Fig. 2 ist in einer schematischen perspektivischen Ansicht ein Körper 9 in einer nicht erfindungsgemäßen Ausführung zur Herstellung eines Schachtunterteils 1 gezeigt.

Die Bezugszeichen in Fig. 2 entsprechen denen aus Fig. 1.

Der Körper 9 ist als einseitig hohler Zylinder ausgebildet, d.h. als Hohlzylinder, bei dem eine Deckfläche ausgebildet ist. Der Körper 9 ist lunkerfrei und homogen ausgebildet.

In der Fig. 3 ist eine schematische seitliche Schnittansicht eines Körpers 9 in der Ausführung gemäß Fig. 2 gezeigt.

Die Bezugszeichen in Fig. 2 entsprechen denen aus den vorangehenden Figuren.

Der Körper 9 ist aus einem Abschnitt eines Vollstabs 10' und einem Ring 11 zusammengesetzt. Um ein fluiddichtes Zusammensetzen des Abschnitts des Vollstabs 10' und des Rings 11 zum Körper 9 zu bewerkstelligen, ist vorgesehen, dass die Ringinnenfläche 15 und die Vollstabmantelfläche 16 entlang des gesamten Umfangs weitmöglichst in Kontakt stehen. Dies kann dadurch erreicht werden, dass die Ringinnenfläche 15 des Rings 11 und die Vollstabmantelfläche 16 des Abschnitts des Vollstabs 10' geringfügig konisch ausgebildet werden, sodass bei gleicher Ausrichtung der Konizität ein Einpressen des Abschnitts des Vollstabs 10' in den Ring 11 ermöglicht wird, wobei die Ringinnenfläche 15 und die Vollstabmantelfläche 16 flächig in Kontakt gebracht werden können.

Die Fluiddichtheit des Körpers 9 wird weiterhin dadurch unterstützt, dass ein Dichtelement 14 in einer Nut an der Vollstabmantelfläche 16 des Abschnitts des Vollstabs 10' vorgesehen ist. Das Dichtelement 14 ist beim Körper 9 gegen die Ringinnenfläche 15 gepresst und stellt so die Fluiddichtheit zwischen dem Abschnitt des Vollstabs 10' und dem Ring 11 her.

Weiterhin ist vorgesehen, dass ein Vorsprung 17 an dem Ring 11 ausgebildet ist, welcher mit einer entsprechenden Gegenkontur am Abschnitt des Vollstabs 10' derart in Eingriff gebracht werden kann, dass die Lage des Rings 11 und des Abschnitts des Vollstabs 10' zueinander definiert ist. Hilfreich zur Herstellung der Fluiddichtheit zwischen dem Ring 11 und dem Abschnitt des Vollstabs 10' kann auch eine Schweißverbindung 18 entlang des Randes des gesamten Berührungsabschnitts sein.

Der Körper 9 ist zweiteilig ausgebildet.

Der so gebildete Körper 9 benötigt für die Weiterbearbeitung zum Schachtunterteil 1 weniger Materialabtrag bzw. Materialaufbau, sodass das zu formende Schachtunterteil 1 schneller und kostengünstiger geformt werden kann.

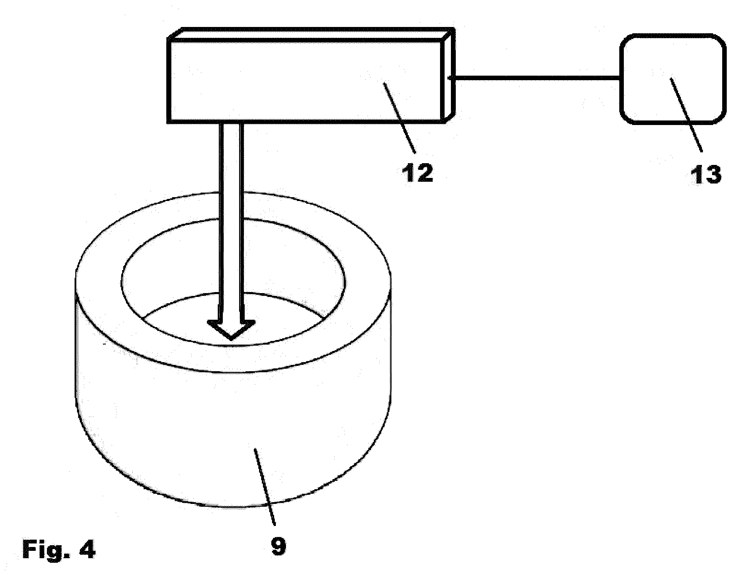

In der Fig. 4 ist eine schematische perspektivische Ansicht einer Maschine 12 bei der Bearbeitung eines Körpers 9 in der Ausführung gemäß Fig. 2 dargestellt.

Die Bezugszeichen in Fig. 4 entsprechen denen aus den vorangehenden Figuren.

Die Maschine 12, die als Maschine zum Materialabtrag und / oder zum Materialauftrag ausgebildet ist, bearbeitet den Körper 9 zur Formung des Schachtunterteils 1, das zweiteilig ausgebildet ist.

Die Steuerung der Maschine 12 erfolgt durch einen Datensatz 13, durch den die einzelnen Arbeitsschritte der Maschine 12 ausgeführt werden.

Die vorstehenden Ausführungen bei der Figurenbeschreibung zum Schachtunterteil gelten selbstverständlich auch für einen Schacht.

### Bezugszeichenliste

- 1: Schachtuntertei
- 2: Funktionskontur
- 3: Gerinne
- 4: Trittfläche
- 5: Zuleiteinrichtung
- 6: Ableiteinrichtung
- 7: Verbindungsabschnitt
- 8: Fläche
- 9: Körper
- 10: Vollstab
- 10': Vollstab
- 11: Ring
- 12: Maschine
- 13: Datensatz
- 14: Dichtelement
- 15: Ringinnenfläche
- 16: Vollstabmantelfläche
- 17: Vorsprung
- 18: Schweißverbindung
- 19: Schacht
- 20: Fluidleit-, -aufnahme- und -speichersystem
- A: erster Schritt
- B: zweiter Schritt

## Patentansprüche

1. Verfahren zur Herstellung eines Schachtunterteils (1) aus einem Vollstab (10) unter Bildung eines Körpers (9), wobei der Vollstab (10) Polymermaterial enthält bzw. aus Polymermaterial besteht und einen etwa kreisförmigen Querschnitt aufweist, wobei der etwa kreisförmige Querschnitt des Vollstabs (10) so groß wie oder etwas größer als der Durchmesser des Schachtunterteils (1) ist, welches herzustellen ist, mit den folgenden Schritten:
• Im ersten Schritt A wird ein Abschnitt des Vollstabs (10) abgetrennt und so der Körper (9) gebildet, der Körper (9) weist die Form eines Zylinders auf, er ist einteilig ausgebildet,
• Im zweiten Schritt B wird aus dem Körper (9) das Schachtunterteil (1) gebildet, wobei aus dem Körper (9) durch Materialabtrag und / oder Materialaufbau das Schachtunterteil (1) geformt wird, wobei hierzu am Schachtunterteil (1) eine Funktionskontur (2) gebildet wird, welche ein Gerinne (3) umfasst, das dazu dient, Fluid zu leiten.

2. Verfahren nach Anspruch 1, **dadurch gekennzeichnet, dass** an der Zylindermantelfläche des Schachtunterteils (1) Zuleiteinrichtungen (5) ausgebildet sind, die derartig geformt sind, dass mit diesen Zuleitrohre verbindbar, beispielsweise in diese einsteckbar sind.

3. Verfahren nach Anspruch 2, **dadurch gekennzeichnet, dass** die Zuleiteinrichtungen (5) weiterhin mit einer Nut versehen sind, um in der Nut ein Dichtungselement aufzunehmen, welches eine fluiddichte Verbindung des an das Schachtunterteil (1) anzuschließenden Zuleitrohres gestattet.

4. Verfahren nach einem der Ansprüche 1 bis 3, **dadurch gekennzeichnet, dass** eine Ableiteinrichtung (6), die in Form eines Muffenanschlusses ausgebildet ist, am Schachtunterteil (1) ausgeformt ist.

## Claims

1. A method for producing a manhole lower part (1) from a solid bar (10), thus forming a body (9), wherein the solid bar (10) contains polymer material or consists of polymer material and has an approximately circular cross-section, wherein the approximately circular cross-section of the solid bar (10) is just as large as or slightly larger than the diameter of the manhole lower part (1) that is to be produced, said method having the following steps:
• in a first step A, a portion of the solid bar (10) is separated off and the body (9) is thus formed, the body (9) has the shape of a cylinder, it is formed in one part,
• in a second step B, the manhole lower part is formed from the body (9), wherein the manhole lower part (1) is shaped from the body (9) by material removal and/or material build-up, wherein to this end a functional contour (2) is formed on the manhole lower part (1) and comprises a channel (3), which serves to conduct fluid.

2. The method according to claim 1, **characterised in that** feed devices (5) are formed on the cylinder lateral surface of the manhole lower part (1) and are formed in such a way that feed pipes are connectable to them, for example are insertable into them.

3. The method according to claim 2, **characterised in that** the feed devices (5) are furthermore provided with a groove in order to receive a seal element in the groove, which seal element allows a fluid-tight connection of the feed pipe that is to be attached to the manhole lower part (1).

4. The method according to any one of claims 1 to 3, **characterised in that** a discharge device (6), which is in the form of a socket connection, is moulded on the manhole lower part (1).

## Revendications

1. Procédé de fabrication d'un fond de regard (1) à partir d'une barre pleine (10) en formant un corps (9), la barre pleine (10) contenant du matériau polymère ou étant constituée de matériau polymère et présentant une section transversale approximativement circulaire, la section transversale approximativement circulaire de la barre pleine (10) étant aussi grande ou légèrement plus grande que le diamètre du fond de regard (1) à fabriquer, avec les étapes suivantes :
• dans la première étape A, une section de la barre pleine (10) est découpée et le corps (9) est ainsi formé, le corps (9) présentant la forme d'un cylindre, il étant réalisé d'une seule pièce,
• dans la deuxième étape B, le fond de regard (1) est formé à partir du corps (9), le fond de regard (1) étant façonné à partir du corps (9) par enlèvement de matière et/ou par accumulation de matière, un contour fonctionnel (2) étant formé à cet effet sur le fond de regard (1), lequel comprend une rigole (3) qui sert à guider du fluide.

2. Procédé selon la revendication 1, **caractérisé en ce que** des dispositifs d'amenée (5) sont réalisés sur la surface d'enveloppe cylindrique du fond de regard (1), lesquels sont façonnés de telle sorte que des tuyaux d'amenée peuvent être reliés à ceux-ci, par exemple être enfichés dans ceux-ci.

3. Procédé selon la revendication 2, **caractérisé en ce que** les dispositifs d'amenée (5) sont en outre pourvus d'une rainure afin de recevoir dans la rainure un élément d'étanchéité permettant une liaison étanche aux fluides du tuyau d'amenée à raccorder au fond de regard (1).

4. Procédé selon l'une quelconque des revendications 1 à 3, **caractérisé en ce qu'**un dispositif d'évacuation (6), qui est réalisé sous la forme d'un raccord à manchon, est formé sur le fond de regards (1).
